(19) **Europäisches Patentamt**
**European Patent Office**
**Office européen des brevets**

(11) **EP 2 160 308 B1**

(12) **FASCICULE DE BREVET EUROPEEN**

(45) Date de publication et mention
de la délivrance du brevet:
**31.07.2013 Bulletin 2013/31**

(51) Int Cl.:
***B60T 8/1766*** *(2006.01)*     ***B60T 13/58*** *(2006.01)*
***B60W 20/00*** *(2006.01)*     ***B60W 30/18*** *(2012.01)*
***B60K 6/20*** *(2007.10)*      ***B60W 10/10*** *(2012.01)*
***B60W 10/18*** *(2012.01)*

(21) Numéro de dépôt: **08805920.9**

(22) Date de dépôt: **03.06.2008**

(86) Numéro de dépôt international:
**PCT/FR2008/050977**

(87) Numéro de publication internationale:
**WO 2008/155500 (24.12.2008 Gazette 2008/52)**

(54) **PROCEDE DE CONTROLE DU FREINAGE RECUPERATIF POUR VEHICULE HYBRIDE ET/OU A QUATRE ROUES MOTRICES ET ARRANGEMENT POUR VEHICULE METTANT EN OEUVRE LE PROCEDE**

VERFAHREN ZUR STEUERUNG DES REGENERATIVEN BREMSENS FÜR HYBRIDFAHRZEUGE UND/ODER ALLRADFAHRZEUGE UND ANORDNUNG FÜR FAHRZEUGE ZUR DURCHFÜHRUNG DES VERFAHRENS

REGENERATIVE BRAKING CONTROL METHOD FOR HYBRID VEHICLES AND/OR FOUR-WHEEL-DRIVE VEHICLES AND ARRANGEMENT FOR VEHICLE USING SAID METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.06.2007 FR 0755912**

(43) Date de publication de la demande:
**10.03.2010 Bulletin 2010/10**

(73) Titulaire: **Renault S.A.S.**
**92100 Boulogne-Billancourt (FR)**

(72) Inventeurs:
• **CAYOL, Olivier**
  **F-78000 Versailles (FR)**
• **LEMINOUX, Gerald**
  **F-78980 Longnes (FR)**

(56) Documents cités:
**WO-A-2006/129820**     **DE-A1-102004 031 572**
**DE-A1-102005 002 993**    **US-A- 5 450 324**
**US-A1- 2004 238 244**     **US-A1- 2006 220 453**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 160 308 B1

## Description

La présente invention concerne un procédé de contrôle du freinage récupératif pour un véhicule hybride ou à quatre roues motrices et un arrangement pour véhicule mettant en oeuvre le procédé.

Dans l'état de la technique, on connaît des véhicules dont l'entraînement est assuré par un moteur thermique et par un moteur électrique. Un tel entraînement est un entraînement hybride.

Dans l'état de la technique on connaît des véhicules dont l'entraînement produit par au moins un actionneur d'entraînement est appliqué sur les quatre roues du véhicule. C'est particulièrement le cas, même si ce n'est pas nécessaire, des véhicules hybrides. Particulièrement, il est connu d'appliquer l'effort moteur ou d'entraînement du moteur thermique sur un premier train et l'effort moteur d'un moteur électrique sur un second train du véhicule.

Dans l'état de la technique, il est enfin connu, quand on dispose d'une machine électrique travaillant en moteur pour l'entraînement du véhicule, de la faire fonctionner en mode de freinage, c'est-à-dire que du point de vue électrique, cette machine, travaillant alors en génératrice, convertit l'énergie mécanique appliquée sur son rotor en un courant électrique qui peut alors être régulé dans un contrôleur de machine électrique comme courant de charge d'une batterie électrique. Dans ce mode de fonctionnement, la consommation d'énergie mécanique produite par la conversion électrique applique un couple de freinage aux roues du véhicule. Il en résulte d'une part que le véhicule peut être au moins partiellement freiné à l'aide de la machine électrique d'entraînement fonctionnant en génératrice et d'autre part que l'énergie cinétique récupérée par le freinage peut être convertie en énergie électrique, ce qui améliore le rendement énergétique global du véhicule au roulage.

Cependant, on connaît aussi de l'état de la technique des solutions au problème de la stabilité du véhicule à l'entraînement ou au freinage qui exige une répartition des efforts d'entraînement ou de freinage entre le train avant et le train arrière. Particulièrement, il est connu que les efforts de freinage sur le train avant doivent être supérieurs aux efforts de freinage sur le train arrière.

Or, quand la machine électrique est sur le train arrière et le moteur thermique sur le train avant, il en résulte que la récupération d'énergie par freinage récupératif devra être plus faible qu'il est possible. Le document US 2004/023244 A1 en est un exemple.

La présente invention apporte remède à ces inconvénients de l'état de la technique. En effet, l'invention concerne un procédé de contrôle du freinage récupératif dans un véhicule hybride, ou un véhicule à 4 roues motrices ou à 2 roues motrices, dans lequel le train arrière est couplé à une machine électrique de récupération d'énergie. Le procédé consiste à déterminer le potentiel d'adhérence sur chacun des roues, à tester une condition d'équi-adhérence sur les potentiels mesurés et à en déduire un signal de contrôle du freinage récupératif de façon à optimiser la récupération d'énergie.

Selon un aspect de l'invention, le potentiel d'adhérence est calculé en fonction des efforts verticaux et des efforts longitudinaux sur chaque train et/ou roue d'un train.

Selon un aspect de l'invention, la condition d'équi-adhérence est établie sur la base d'une relation de degré deux établissant la répartition entre les efforts avant et arrière.

L'invention concerne aussi un arrangement pour véhicule mettant en oeuvre le procédé, le véhicule comportant un moteur thermique d'entraînement des roues avant. L'arrangement consiste en ce que le véhicule est doté d'une machine électrique couplée par un moyen de couplage aux roues arrière du véhicule et dont le contrôleur d'alimentation et/ou de chargement électrique d'une batterie associée est commandé lors d'un mode de fonctionnement en freinage récupératif, par un contrôleur de répartition exécutant le procédé de l'invention.

Selon un aspect de l'invention, le moyen de couplage comporte un différentiel couplé aux roues arrière.

Selon un aspect de l'invention, le moyen de couplage comporte un embrayage connecté au différentiel.

Selon un aspect de l'invention, le moyen de couplage comporte un réducteur couplé à un arbre commun aux roues avant et aux roues arrière.

Selon un aspect de l'invention, le moyen de couplage comporte aussi une boîte de renvoi de l'effort mécanique échangé avec la machine électrique couplée aux roues arrière sur les roues avant.

Selon un aspect de l'invention, l'arrangement comporte aussi un contrôleur de répartition de freinage récupératif qui est connecté à un moyen de commande de mode de freinage récupératif, à un moyen de détection de l'accélération longitudinale, de la vitesse longitudinale et de la masse de façon à déterminer un signal de commande de répartition de l'effort de freinage récupératif sur les roues arrière et/ou sur les roues avant.

Selon un aspect de l'invention, le contrôleur de répartition de freinage comporte aussi un moyen pour exécuter une prestation de roulage électrique et qui est connecté à un moyen de commande de roulage électrique et qui produit un signal de commande de roulage électrique sur le contrôleur de machine électrique en mode moteur et/ou sur le moyen de couplage de la machine électrique aux roues arrière ou aux roues arrière et aux roues avant.

Selon un aspect de l'invention, le contrôleur de répartition de freinage comporte aussi un moyen pour exécuter une prestation de couverture du trou de couple qui produit un signal de commande du contrôleur de machine électrique en mode moteur et/ou sur le moyen de couplage de la machine électrique aux roues arrière ou aux roues arrière et aux roues avant de manière à compenser un trou de couple moteur produit par une transition d'état de la chaîne de transmission depuis le moteur thermique.

D'autres caractéristiques et avantages de la présente invention seront mieux compris à l'aide de la description et des figures annexées parmi lesquelles :

- la figure 1 représente un schéma d'un arrangement selon un mode particulier de réalisation de l'invention ;
- la figure 2 représente une mode préféré de réalisation du procédé d'assemblage utilisant un agencement d'assemblage selon l'invention ;
- la figure 3 représente une courbe expliquant une étape du procédé de la figure 2 ; et
- la figure 4 représente un schéma d'un autre arrangement selon l'invention.

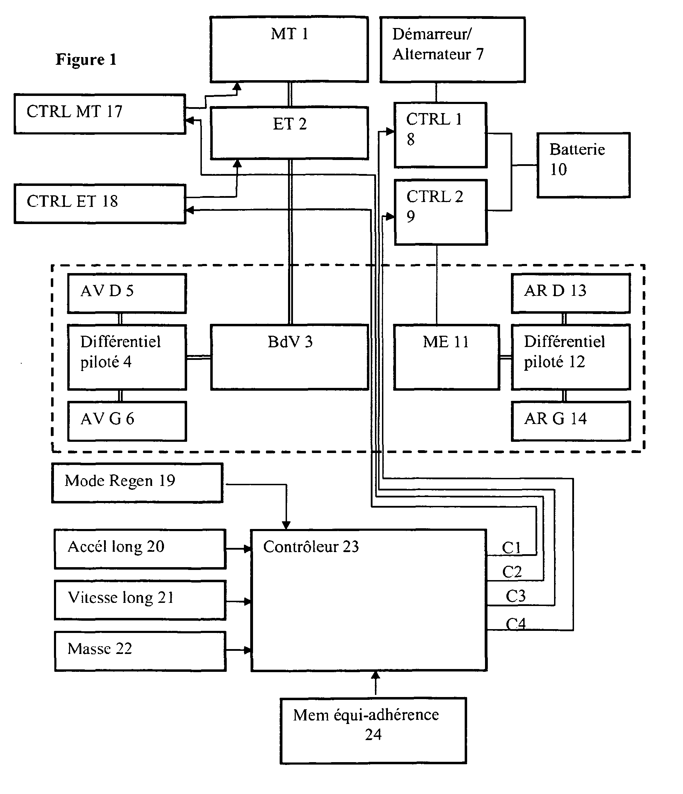

A la figure 1, on a représenté un arrangement selon l'invention. Dans cette architecture, le châssis comporte un train avant avec une paire de roues avant 5 et 6 couplées par un différentiel 4 à l'arbre secondaire d'une boîte de vitesses 3 dont l'arbre primaire est entraîné par un moteur thermique 1 à travers un embrayage 2. Le moteur thermique 1 est couplé par ailleurs à un alternateur démarreur 7 dont le dimensionnement ne permet pas de faire un freinage récupératif efficace à lui seul.

Le train arrière comporte deux roues arrière 13 et 14 couplées par un différentiel 12 à l'arbre du rotor d'une machine électrique 11. La machine électrique 11 peut être la machine électrique d'entraînement d'un véhicule hybride à quatre roues motrices à condition qu'elle puisse aussi fonctionner en génératrice dans un mode de fonctionnement en freinage récupératif.

L'arrangement de l'invention comporte aussi un contrôleur de répartition de freinage 23 qui reçoit en entrée une pluralité de signaux d'entrée qui vont être décrits ci-après.

Le signal d'entrée caractéristique de mode de freinage récupératif indique que l'arrangement de l'invention doit fonctionner en mode de récupération électrique lors d'un freinage et ledit signal d'entrée est produit par un module pour produire un signal de mode de freinage récupératif 19. Ce module peut comporter un moyen d'évaluation de la combinaison d'un signal logique de possibilité de freinage récupératif, placé à l'état actif par une commande de conduite, et d'un signal d'activation du freinage du véhicule. La commande de conduite peut être placée par un calculateur de conduite ou par la manipulation d'un commutateur d'état placé sur le poste de conduite à destination du conducteur. Le signal d'activation de freinage peut être produit par un capteur d'appui sur la pédale de freinage du poste de conduite et/ou par un calculateur de conduite.

Le signal d'entrée caractéristique de l'accélération longitudinal est produit par un capteur d'accélération longitudinal 20 qui permet notamment de déterminer les efforts longitudinaux sur les roues avant et sur les roues arrière, séparément.

Le signal d'entrée caractéristique de la vitesse longitudinal est produit par un capteur de vitesse longitudinal 21 qui permet notamment de distinguer les vitesses de rotation des roues avant et arrière.

Le signal d'entrée caractéristique de mesure ou d'estimation de masse est produit par un moyen de mesure ou d'estimation de la masse 22 qui permet notamment de déterminer la composante verticale des efforts sur chacune des roues et plus particulièrement sur chaque train avant et arrière.

Le contrôleur de répartition de freinage 23 comporte ensuite une connexion avec une base de données de conditions d'équi-adhérence qui permettent de déterminer la répartition la plus élevée de freinage entre le train avant et le train arrière et de se déterminer par rapport à cet optimum en fonction de diverses contraintes liées notamment à l'anti-patinage, à la distance de freinage admissible, etc. La base de données est enregistrée dans mémoire de données de test d'équi-adhérence 24.

Le contrôleur 23 de répartition de freinage produit alors de un à quatre signaux de commande et nécessairement un signal de commande C4 au contrôleur de puissance 9 qui régule le courant débité par la machine électrique de façon à réguler le couple résistant qu'elle produit sur les roues arrière 13 et 14. A cet effet, le contrôleur de puissance 9 comporte un moyen pour réguler le courant produit par la machine électrique 11 fonctionnant en génératrice, selon une consigne d'effort de freinage sur les roues arrière déterminée en permanence pendant un mode de fonctionnement en freinage récupératif par le contrôleur 23.

Dans un mode particulier de réalisation, le contrôleur de répartition de freinage 23 produit aussi un signal de commande C3 du contrôleur 8 de puissance qui contrôle le courant de la machine électrique 7, notamment, quand elle est un alternateur démarreur pour le moteur thermique 1. Le signal de commande C3 permet alors de contrôler, en fonction de la répartition des efforts de freinage entre l'avant et l'arrière, le courant de charge de la batterie 10 qui peut être produit par l'alternateur démarreur en complément de celui débité par la machine électrique 11 couplée aux roues arrière.

Dans un mode particulier de réalisation, le contrôleur de répartition de freinage en freinage récupératif 23 produit des signaux de commande C1 à destination des actionneurs du moteur thermique 1 et de l'embrayage 2, quand il s'agit d'un embrayage piloté. En pratique, dans tous les cas, ces signaux C1 et C2 sont associés à des signaux de freinage par friction appliqués aux roues avant et le cas échéant pour un solde d'effort de freinage non disponible par la machine électrique 11 en freinage récupératif par des signaux de freinage par friction appliqués aux roues arrière. Du fait que ces signaux ne sont appliqués qu'en conjonction avec les moyens de l'invention ou qu'ils sont appliqués quand le procédé de l'invention n'est pas exécuté, par exemple lorsque le véhicule est en fonctionnement en dehors du mode de freinage récupératif, ces signaux de freinage par friction ne sont pas plus décrits, ni représentés au dessin.

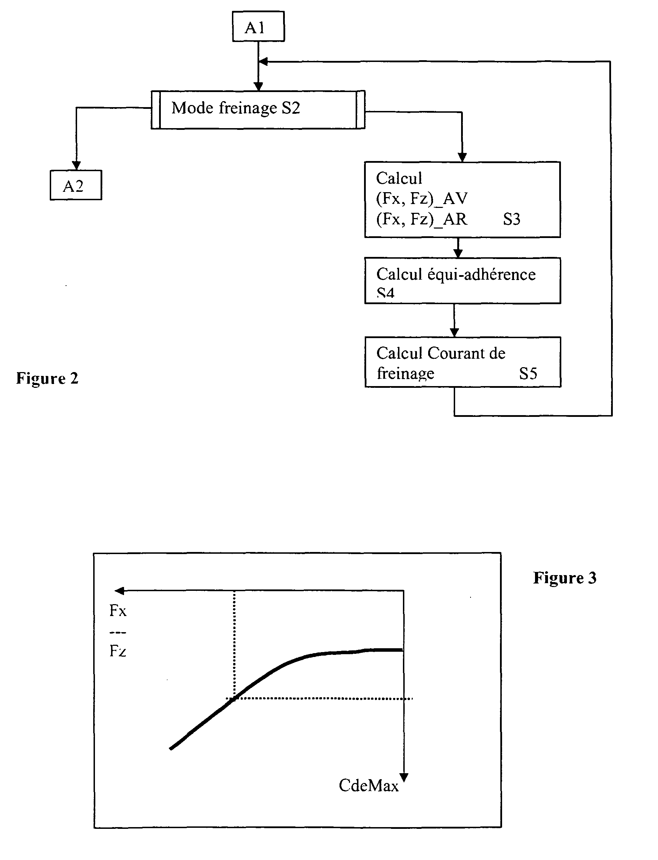

A la figure 2, on a représenté l'organigramme du procédé de l'invention dans son mode préféré de réalisation. Lors du fonctionnement du véhicule A1, un changement de mode de fonctionnement en freinage récupératif est détecté lors d'une étape S2. Si ce n'est pas le cas, le fonctionnement du véhicule hors freinage récupératif est repris. Si c'est le cas, le contrôle passe à l'étape S3 au cours de laquelle le contrôleur de répartition de freinage 23 ou un organe de calcul correspondant lié au véhicule contrôlé calcule sur la base de l'accélération et de l'estimation de la masse les efforts longitudinaux Fx et verticaux Fz à la fois sur le train avant et sur le train arrière. Il en est déduit deux couples de valeurs (Fx, Fz)_AV sur le train avant et (Fx, Fz)_AR sur le train arrière qui permettent de calculer les potentiels d'adhérence sur le train avant et sur le train arrière respectivement $\mu\_AV = Fx\_AV/Fz\_AV$ et $\mu\_AR = Fx\_AR/Fz\_AR$.

Au cours d'une étape ultérieure S4, le contrôleur 23 de répartition de freinage ou un organe de calcul correspondant lié au véhicule contrôlé calcule une condition de commande pour générer un signal de commande au moins C4 (Figure 1) du courant débité par la machine électrique en freinage récupératif sur les roues arrière (machine 11 à la figure 1) de façon à se rapprocher d'une commande de freinage globale en situation d'équi-adhérence. Les autres signaux de commande notamment C1 à C3 sont déduits de cette condition d'équi-adhérence en tenant compte de la force totale de freinage demandée.

Le courant de freinage qui détermine le couple de freinage appliqué par la machine électrique en freinage récupératif (la machine 11 de la figure 1) est alors déterminé lors d'une étape S5 et le processus est repris à l'étape S2 tant qu'on est en freinage récupératif.

A la figure 3, on a représenté une courbe représentative d'une condition de freinage en équi-adhérence entre les roues avant AV et les roues arrière AR en fonction du potentiel d'adhérence Fx/Fz. Dans un mode préféré de réalisation, la relation de consigne maximale est déterminée par une fonction du second degré, la courbe représentée étant alors une parabole. La donnée du potentiel d'adhérence en abscisse détermine en ordonnée la valeur maximale de commande de freinage récupératif sur la machine électrique de freinage récupératif (comme la machine 11 de la figure 1). Cette courbe est enregistrée dans la base de données des conditions d'équi-adhérence enregistrée dans la mémoire 24 de conditions d'équi-adhérence (Figure 1) et en pratique, en fonction de divers paramètres comme la distance de freinage, l'état de la route ou encore la vitesse de glissement de la roue à la route, plusieurs conditions sont enregistrées et sont sélectivement utilisées lors de l'étape S4 du procédé précité.

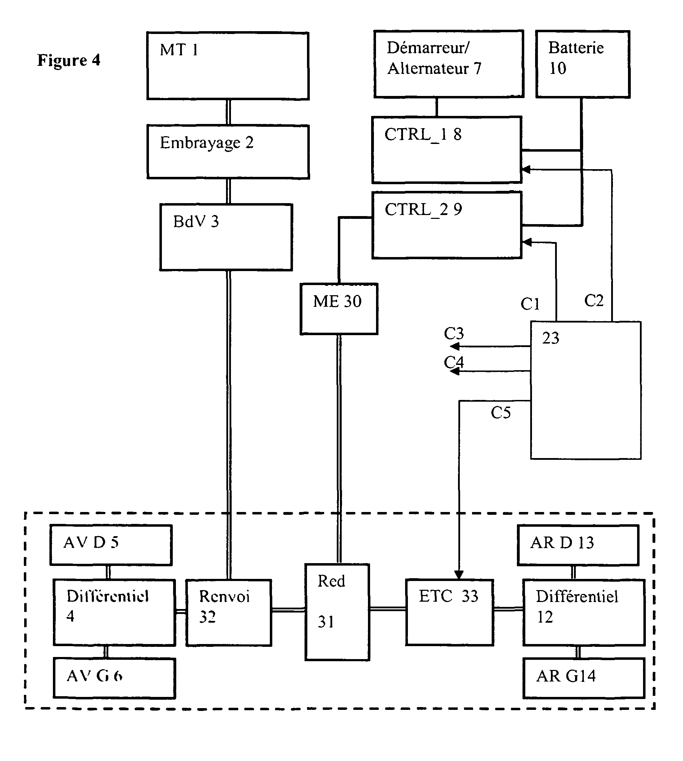

A la figure 4, on a représenté un autre arrangement selon l'invention dans lequel l'architecture de véhicule est différente de l'architecture de la figure 1. Cependant, les mêmes éléments de la figure 4 portent les mêmes numéros de référence et ne seront pas plus décrits.

Dans le châssis du mode de réalisation de la figure 4, le véhicule comporte originellement un seul moteur thermique 1 qui est couplé à une ligne d'arbre de transmission de façon à réaliser un entraînement à quatre roues. De manière à faire bénéficier le véhicule d'un freinage récupératif, l'arrangement de l'invention consiste à intercaler un réducteur à roue dentée sur l'arbre de sortie d'une boîte de renvoi 32 dont l'autre arbre de sortie est connecté au différentiel 4 des roues avant, tandis que la sortie du réducteur 31 est couplé à un embrayage piloté 33. Le réducteur 31 est par ailleurs couplé à une machine électrique 31 dont le contrôleur de puissance 9 l'alimente en courant électrique sur la batterie 10 ou lui permet de débiter un courant de charge lors du freinage récupératif.

On remarque que l'arrangement de l'invention permet de réaliser plusieurs prestations selon l'architecture de véhicule sur laquelle l'arrangement est disposé.

Particulièrement, quand l'arrangement est disposé sur un véhicule à quatre roues motrices avec un seul moteur thermique comme il est représenté à la figure 4, il permet de réaliser une prestation de freinage récupératif sur les seules roues avant en ouvrant l'embrayage arrière 33 en commandant par un signal de commande C5 convenable l'actionneur de l'embrayage piloté 33.

Dans un autre mode de réalisation, il est aussi prévu de réaliser une prestation de freinage récupératif à la fois sur les roues avant et sur les roues arrière en réalisant une commande proportionnelle par un signal de commande C5 convenable produit par le contrôleur 23 de répartition de freinage et appliqué sur un actionneur connu de l'embrayage piloté 33. Il est alors possible d'appliquer non seulement une consigne globale de freinage récupératif FR_T par un signal de commande C1 sur le courant de récupération produit par la machine électrique 30 de freinage récupératif, mais aussi une commande proportionnelle K par un signal de commande C5 appliqué à l'actionneur de l'embrayage piloté 33 et calculée selon le procédé de l'invention, de sorte que :

$$Fx\_AV + Fx\_AR < FR\_T$$

$$Fx\_AV = K*FR\_T$$

$$Fx\_AR = (1 - K)*FR\_T$$

qui détermine à partir d'une consigne de freinage récupératif totale FR_T les efforts de freinage Fx_AV appliqué sur les roues avant AV et Fx_AR appliqué sur les roues arrière AR.

Selon un aspect de l'invention, la machine électrique de l'arrangement de l'invention peut être disposée sur le train arrière si le moteur thermique est disposé sur le train avant ce qui participe à un équilibrage des charges sur les deux trains du véhicule.

Selon un aspect de l'invention, l'arrangement peut être aussi disposé ainsi qu'il a été décrit en relation avec la figure 1 ou encore en relation avec la figure 4, sur un véhicule à quatre roues dont un seul train est moteur. Dans ce cas, et si le train originellement moteur est le train avant, l'arrangement de l'invention consiste à disposer une machine électrique sur le train arrière ou bien selon l'architecture de la figure 1 dans laquelle la machine électrique est directement connectée à un différentiel arrière ou bien selon l'architecture de la figure 4 dans laquelle la machine électrique est disposée sur les roues arrière à travers un embrayage piloté connecté à un différentiel arrière, et le cas échéant, mais pas nécessairement comme il est aussi représenté à la figure 4, aux roues avant à travers un réducteur 31 et une boîte de renvoi 32.

Particulièrement, quand l'arrangement est disposé sur un véhicule à quatre roues motrices avec un seul moteur thermique comme il est représenté à la figure 4, il permet de réaliser une prestation de roulage électrique. A cet effet, le moteur thermique 1 est découplé de la ligne de transmission par arrêt de l'allumage sur un signal de commande C2, ou encore par débrayage. Dans ce mode de réalisation, le contrôleur de répartition de freinage 23 sert aussi de contrôleur du mode de roulage électrique. Il coopère avec un moyen de commande de mode de fonctionnement en roulage électrique disposé comme le moyen de commande de fonctionnement en freinage récupératif 19 de l'arrangement de la figure 1. Le contrôleur 23 de l'arrangement de l'invention produit alors un signal de commande C1 pour la machine électrique 31 qui est alimentée à travers son contrôleur de puissance 9 de façon à débiter un couple moteur sur la ligne d'arbre. De plus, le contrôleur 23 de l'arrangement produit alors un signal de commande C5 à destination d'un actionneur convenable de l'embrayage 33 de sorte que, selon l'état d'activation produit par le signal de commande C5, le roulage peut être appliqué sur les roues avant seules si l'embrayage 33 est découplé ou sur les roues avant et sur les roues arrière si l'embrayage 33 est engagé.

Particulièrement, quand l'arrangement est disposé sur un véhicule à quatre roues motrices avec un seul moteur thermique comme il est représenté à la figure 4, il permet de réaliser une prestation de couverture du trou de couple. En effet, dans un véhicule équipé d'un moteur thermique et d'une boîte de vitesses, il existe des changements d'état de la chaîne de transmission de l'effort moteur aux roues du véhicule pendant lequel le couple est considérable réduit ou même annulé. C'est notamment le cas à cause des jeux mécaniques mais aussi le cas du passage au point mort d'une boîte de vitesses discrète. Dans ce but le contrôleur de freinage récupératif 23 qui possède un moyen pour exécuter une prestation de couverture du trou de couple, comporte un moyen pour détecter une transition d'état de la chaîne de transmission. Lorsque le moyen pour exécuter une prestation de couverture du trou de couple détecte une telle transition, il produit un signal de commande du contrôleur de machine électrique en mode moteur et/ou sur le moyen de couplage de la machine électrique aux roues arrière ou aux roues arrière et aux roues avant de manière à compenser un trou de couple moteur produit par une transition d'état de la chaîne de transmission depuis le moteur thermique.

On remarque ici un avantage particulier de l'invention sur de nombreuses solutions au problème de la stabilité du véhicule qui est de permettre de simplifier le calcul du point de fonctionnement du moteur thermique par la présence d'une unique machine électrique intervenant en freinage et le cas échéant en roulage électrique ou en bouchage du trou de couple, ce qui permet de parvenir à un point de fonctionnement optimal.

On remarque aussi un autre avantage de l'invention qui réside, dans le cas de l'architecture représentée à la figure 4, dans laquelle un embrayage piloté arrière est prévu, de gagner un degré de liberté dans la solution optimale du problème de stabilité puisqu'on peut calculer séparément l'effort de freinage et ou d'entraînement produit par la machine électrique et le couple réellement échangé avec les roues arrière ou avec les roues arrière et les roues avant grâce au pilotage par le signal de commande C5 de l'embrayage piloté arrière 33.


**Revendications**

1. Procédé de contrôle du freinage récupératif dans un véhicule hybride, ou un véhicule à 4 roues motrices ou à 2 roues motrices, dans lequel le train arrière est couplé à une machine électrique (11, 30) de récupération d'énergie et le train avant est directement couplé à un moteur thermique (1) par le biais d'un embrayage (2), **caractérisé en ce qu'**

   - on détecte (S2) le mode de fonctionnement du véhicule,
   - lorsque le véhicule fonctionne en mode de freinage récupératif, on calcule (S3) les efforts verticaux et les efforts longitudinaux sur chaque train et/ou roue d'un train de manière à déterminer le potentiel d'adhérence (Fx/Fz) sur chacune des roues (AV/AR),
   - on teste (S4) une condition d'équi-adhérence déterminée à partir d'une courbe fonction des potentiels mesurés et de la valeur maximale de commande de freinage récupératif sur la machine électrique, de manière à générer au moins un signal de commande (C4) du courant débité par la machine électrique (11, 30) sur les roues arrières (13, 14),
   - on détermine (S5) un couple de freinage appliqué par la machine électrique (11, 30) de façon à optimiser la récupération d'énergie, et

- on génère un signal de commande (C3) en fonction de la condition d'équi-adhérence, de manière à contrôler le courant de charge de la batterie (10).

2. Procédé selon la revendication 1, **caractérisé en ce que** la condition d'équi-adhérence est établie sur la base d'une relation de degré deux établissant la répartition entre les efforts avant et arrière.

3. Procédé selon la revendication 1, **caractérisé en ce que** lorsque le véhicule ne fonctionne pas en mode de freinage récupératif, on génère des signaux de commande (C1, C2) du moteur thermique (1) et de l'embrayage (2) en fonction de la condition d'équi-adhérence, de manière à appliquer une couple de freinage par friction aux roues avant (5, 6).

4. Procédé selon la revendication 1, **caractérisé en ce que** l'on génère un signal de commande (C5) d'un embrayage piloté (33) relié aux roues arrières (13, 14), de manière à appliquer un couple de freinage sur les seules roues avant (5, 6).

5. Arrangement pour véhicule mettant en oeuvre le procédé selon la revendication 1, le véhicule comportant un moteur thermique (1) d'entraînement relié directement aux roues avant par le biais d'un embrayage (2), **caractérisé en ce que** le véhicule est doté d'une machine électrique (11 ; 30) couplée par un moyen de couplage (12 ; 31, 33, 12) aux roues arrière du véhicule et d'un contrôleur de répartition (23) exécutant le procédé selon la revendication 1, l'arrangement pour véhicule comprenant un premier contrôleur de puissance (9) régulant le couple résistant produit par la machine électrique (11) sur les roues arrières (13, 14) et un deuxième contrôleur de puissance (8) contrôlant le courant de charge de la batterie (10), lesdits premier et deuxième contrôleurs de puissance (8, 9) étant commandés par le contrôleur de répartition, lors d'un mode de fonctionnement en freinage récupératif .

6. Arrangement selon la revendication 5, **caractérisé en ce que** le moyen de couplage comporte un différentiel (12) couplé aux roues arrière.

7. Arrangement selon la revendication 5, **caractérisé en ce que** le moyen de couplage comporte un embrayage (33) connecté au différentiel arrière (12).

8. Arrangement selon la revendication 5, **caractérisé en ce que** le moyen de couplage comporte un réducteur (31) couplé à un arbre commun aux roues avant et aux roues arrière.

9. Arrangement selon la revendication 5, **caractérisé en ce que** le moyen de couplage comporte aussi une boîte de renvoi (32) de l'effort mécanique échangé avec la machine électrique (30) couplée aux roues arrière sur les roues avant.

10. Arrangement selon la revendication 5, **caractérisé en ce que** le contrôleur de répartition de freinage récupératif (23) est connecté à un moyen de commande (19) de mode de freinage récupératif, à un moyen (20) de détection de l'accélération longitudinale, (21) de la vitesse longitudinale et (22) de la masse de façon à déterminer un signal de commande (C4, C5) de répartition de l'effort de freinage récupératif sur les roues arrière et/ou sur les roues avant.

11. Arrangement selon la revendication 5, **caractérisé en ce que** le contrôleur de répartition de freinage (23) comporte aussi un moyen pour exécuter une prestation de roulage électrique et qui est connecté à un moyen de commande de roulage électrique et qui produit un signal de commande de roulage électrique sur le contrôleur de machine électrique en mode moteur et/ou sur le moyen de couplage de la machine électrique aux roues arrière ou aux roues arrière et aux roues avant.

12. Arrangement selon la revendication 5, **caractérisé en ce que** le contrôleur de répartition de freinage comporte aussi un moyen pour exécuter une prestation de couverture du trou de couple qui produit un signal de commande du contrôleur de machine électrique en mode moteur et/ou sur le moyen de couplage de la machine électrique aux roues arrière ou aux roues arrière et aux roues avant de manière à compenser un trou de couple moteur produit par une transition d'état de la chaîne de transmission depuis le moteur thermique.

**Patentansprüche**

1. Verfahren zur Steuerung des regenerativen Bremsens in einem Hybridfahrzeug oder in einem Fahrzeug mit Vierradantrieb oder mit Zweiradantrieb, wobei die Hinterachse mit einer elektrischen Maschine (11, 30) zur Energierückgewinnung und die Vorderachse über eine Kupplung (2) direkt mit einem Verbrennungsmotor (1) gekoppelt ist, **dadurch gekennzeichnet, dass**

   - die Betriebsart des Fahrzeugs erfasst wird (S2),
   - wenn das Fahrzeug in der regenerativen Bremsbetriebsart ist, die senkrechten Kräfte und die Längskräfte auf jeder Achse und/oder auf jedem Rad einer Achse berechnet werden (S3), um das Haftungspotential (Fx/Fz) an jedem der Räder (AV/AR) zu bestimmen,

- eine Bedingung der Gleich-Haftung, die ausgehend von einer von den gemessenen Potentialen und vom maximalen Steuerwert des regenerativen Bremsens auf der elektrischen Maschine abhängigen Kurve bestimmt wird, getestet wird (S4), um mindestens ein Steuersignal (C4) des von der elektrischen Maschine (11, 30) abgegebenen Stroms auf die Hinterräder (13, 14) zu erzeugen,

- ein durch die elektrische Maschine (11, 30) angewendetes Bremsmoment bestimmt wird (S5), um die Energierückgewinnung zu optimieren, und

- ein Steuersignal (C3) abhängig von der Gleich-Haftungsbedingung erzeugt wird, um den Ladestrom der Batterie (10) zu steuern.

2. Verfahren nach Anspruch 1, **dadurch gekennzeichnet, dass** die Gleich-Haftungsbedingung auf der Basis einer Beziehung des Grads 2 hergestellt wird, die die Verteilung zwischen den vorderen und hinteren Kräften herstellt.

3. Verfahren nach Anspruch 1, **dadurch gekennzeichnet, dass**, wenn das Fahrzeug nicht in der regenerativen Bremsbetriebsart ist, Steuersignale (C1, C2) des Verbrennungsmotors (1) und der Kupplung (2) abhängig von der Gleich-Haftungsbedingung erzeugt werden, um ein Reibungsbremsmoment an die Vorderräder (5, 6) anzuwenden.

4. Verfahren nach Anspruch 1, **dadurch gekennzeichnet, dass** ein Steuersignal (C5) einer mit den Hinterrädern (13, 14) verbundenen gesteuerten Kupplung (33) erzeugt wird, um ein Bremsmoment nur an die Vorderräder (5, 6) anzuwenden.

5. Anordnung für ein Kraftfahrzeug, die das Verfahren nach Anspruch 1 anwendet, wobei das Fahrzeug einen Verbrennungsantriebsmotor (1) aufweist, der über eine Kupplung (2) direkt mit den Vorderrädern verbunden ist, **dadurch gekennzeichnet, dass** das Fahrzeug mit einer elektrischen Maschine (11; 30), die durch eine Koppeleinrichtung (12; 31, 33, 12) mit den Hinterrädern des Fahrzeugs gekoppelt ist, und mit einer Verteilungssteuereinheit (23) versehen ist, die das Verfahren nach Anspruch 1 ausführt, wobei die Fahrzeuganordnung eine erste Leistungssteuereinheit (9), die das von der elektrischen Maschine (11) erzeugte Widerstandsmoment auf die Hinterräder (13, 14) regelt, und eine zweite Leistungssteuereinheit (8) enthält, die den Ladestrom der Batterie (10) steuert, wobei die erste und die zweite Leistungssteuereinheit (8, 9) in einer regenerativen Bremsbetriebsart von der Verteilungssteuereinheit gesteuert werden.

6. Anordnung nach Anspruch 5, **dadurch gekennzeichnet, dass** die Kopplungseinrichtung ein mit den Hinterrädern gekoppeltes Differential (12) aufweist.

7. Anordnung nach Anspruch 5, **dadurch gekennzeichnet, dass** die Kopplungseinrichtung eine mit dem hinteren Differential (12) verbundene Kupplung (33) aufweist.

8. Anordnung nach Anspruch 5, **dadurch gekennzeichnet, dass** die Kopplungseinrichtung ein mit einer den Vorderrädern und den Hinterrädern gemeinsamen Welle gekoppeltes Untersetzungsgetriebe (31) aufweist.

9. Anordnung nach Anspruch 5, **dadurch gekennzeichnet, dass** die Kopplungseinrichtung auch ein Umlenkgetriebe (32) der mit der mit den Hinterrädern gekoppelten elektrischen Maschine (30) ausgetauschten mechanischen Kraft auf die Vorderräder aufweist.

10. Anordnung nach Anspruch 5, **dadurch gekennzeichnet, dass** die Verteilungssteuereinheit des regenerativen Bremsens (23) mit einer Steuereinrichtung (19) der regenerativen Bremsbetriebsart, mit einer Einrichtung (20) zur Erfassung der Längsbeschleunigung, (21) der Längsgeschwindigkeit und (22) der Masse verbunden ist, um ein Steuersignal (C4, C5) der Verteilung der regenerativen Bremskraft auf die Hinterräder und/oder auf die Vorderräder zu bestimmen.

11. Anordnung nach Anspruch 5, **dadurch gekennzeichnet, dass** die Bremsverteilungssteuereinheit (23) auch eine Einrichtung aufweist, um eine elektrische Fahrleistung auszuführen, und die mit einer elektrischen Fahrsteuereinrichtung verbunden ist, und die ein elektrisches Fahrsteuersignal auf die Steuereinheit der elektrischen Maschine in der Motorbetriebsart und/oder auf die Kopplungseinrichtung der elektrischen Maschine an die Hinterräder oder an die Vorderräder und an die Vorderräder erzeugt.

12. Anordnung nach Anspruch 5, **dadurch gekennzeichnet, dass** die Bremsverteilungssteuereinheit auch eine Einrichtung aufweist, um eine Überdeckungsleistung des Drehmomentlochs auszuführen, die ein Steuersignal der Steuereinheit der elektrischen Maschine in der Motorbetriebsart und/oder auf die Koppeleinrichtung der elektrischen Maschine an die Hinterräder oder an die Hinterräder und die Vorderräder erzeugt, um ein Motordrehmomentloch zu kompensieren, das von einem Zustandsübergang der Übertragungskette vom Verbrennungsmotor erzeugt wird.

**Claims**

1. Method of controlling regenerative braking in a hybrid vehicle, or a 4-wheel-drive vehicle, or a 2-wheel-drive vehicle, in which the rear wheelset is coupled to a regenerative electric machine (11, 30), and the front wheelset is coupled directly to a combustion engine (1) via a clutch (2), **characterized in that**

   - the mode of operation of the vehicle is detected (S2),
   - when the vehicle is operating in regenerative braking mode, the vertical and longitudinal forces on each wheelset and/or wheel of one wheelset are calculated (S3) so as to determine the grip potential (Fx/Fz) on each of the wheels (AV/AR),
   - a determined equal-grip condition is tested for (S4) using a curve that is a function of the measured potentials and of the maximum command value for regenerative braking on the electric machine, so as to generate at least a command signal (C4) for the current delivered by the electric machine (11, 30) to the rear wheels (13, 14),
   - a braking torque applied by the electric machine (11, 30) is determined (S5) so as to optimize regeneration, and
   - a command signal (C3) is generated on the basis of the equal-grip condition, so as to control the current used for charging the battery (10).

2. Method according to Claim 1, **characterized in that** the equal-grip condition is established on the basis of a second-order relationship establishing the apportioning of force between front and rear.

3. Method according to Claim 1, **characterized in that** when the vehicle is not operating in regenerative braking mode, command signals (C1, C2) for the combustion engine (1) and for the clutch (2) are generated on the basis of the equal-grip condition, so that a braking torque is applied by friction to the front wheels (5, 6).

4. Method according to Claim 1, **characterized in that** a command signal (C5) is generated for a controlled clutch (33) which is connected to the rear wheels (13, 14) so that a braking torque is applied to the front wheels (5, 6) only.

5. Arrangement for a vehicle implementing the method according to Claim 1, the vehicle comprising a combustion engine (1) for driving which is connected directly to the front wheels via a clutch (2), **characterized in that** the vehicle is provided with an electric machine (11; 30) coupled by a coupling means (12; 31, 33, 12) to the rear wheels of the vehicle and an apportioning controller (23) executing the method according to Claim 1, the arrangement for a vehicle comprising a first power controller (9) regulating the resistive torque produced by the electric machine (11) on the rear wheels (13, 14) and a second power controller (8) controlling the current used to charge the battery (10), the said first and second power controllers (8, 9) being commanded by the apportioning controller in a regenerative braking mode of operation.

6. Arrangement according to Claim 5, **characterized in that** the coupling means comprises a differential (12) coupled to the rear wheels.

7. Arrangement according to Claim 5, **characterized in that** the coupling means comprises a clutch (33) connected to the rear differential (12).

8. Arrangement according to Claim 5, **characterized in that** the coupling means comprises a reduction gear (31) coupled to a shaft common to the front wheels and to the rear wheels.

9. Arrangement according to Claim 5, **characterized in that** the coupling means also comprises a bevel gearbox (32) for transmitting to the front wheels the mechanical force exchanged with the electric machine (30) that is coupled to the rear wheels.

10. Arrangement according to Claim 5, **characterized in that** the regenerative braking apportioning controller (23) is connected to a means (19) of commanding the regenerative braking mode, to a means (20) of detecting the longitudinal acceleration, (21) the longitudinal speed and (22) the mass so as to determine a command signal (C4, C5) for apportioning the regenerative braking force between the rear wheels and/or the front wheels.

11. Arrangement according to Claim 5, **characterized in that** the brake apportioning controller (23) also comprises a means for executing an electric running facility and which is connected to a means of commanding electric running and which produces an electric running command signal on the electric machine controller in motor mode and/or on the means of coupling the electric machine to the rear wheels or to the rear wheels and the front wheels.

12. Arrangement as according to Claim 5, **characterized in that** the brake apportioning controller also comprises a means for executing a facility to cover the torque hole which produces a signal to command the electric machine controller in a motor mode and/or on the means of coupling the electric machine to the rear wheels or to the rear wheels and the front wheels so as to fill an engine torque hole produced by a change in state of the drive train leading from

the combustion engine.

**Figure 1**

Figure 2

A1

Mode freinage S2

A2

Calcul
(Fx, Fz)_AV
(Fx, Fz)_AR      S3

Calcul équi-adhérence
S4

Calcul Courant de
freinage      S5

Figure 3

Fx
---
Fz

CdeMax

**Figure 4**

MT 1

Embrayage 2

BdV 3

Démarreur/
Alternateur 7

Batterie
10

CTRL_1 8

CTRL_2 9

ME 30

C1

C2

23

C3

C4

C5

AV D 5

AR D 13

Différentiel
4

Renvoi
32

Red
31

ETC 33

Différentiel
12

AV G 6

AR G14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004023244 A1